# FASCICULE DE BREVET EUROPEEN

(11) **EP 2 003 312 B1**
(45) Date de publication et mention de la délivrance du brevet: **09.06.2010**
(21) Numéro de dépôt: 08157939.3
(22) Date de dépôt: 10.06.2008
(51) Int. Cl.: F02C 7/20, F02C 7/00, F01D 25/30

(54) **Moyeu équipé pour carter d'échappement comportant des nervures de repartition de contraintes**
Nabe eines Austrittsgehäuses, die Rippen zur Umlagerung der Beanspruchungen umfasst
Hub of an exhaust case comprising stress-distribution ribs

(30) Priorité: 13.06.2007 FR 0755736
(43) Date de publication de la demande: 17.12.2008
(73) Titulaire: Snecma, 75015 Paris (FR)
(72) Inventeur: Bader, Valentine, 77000, Vaux le Penil (FR); Marnas, Laurent, Pierre, Elysée, Gaston, 77000, Vaux le Penil (FR); Pommier, Nicolas, 91800, Brunoy (FR); Schnell, Christian, René, 77130, Forges (FR)
(74) Mandataire: Ilgart, Jean-Christophe

(56) Documents cités:
- EP-A- 0 298 898
- EP-A- 0 344 877
- GB-A- 2 226 086
- US-A- 5 634 767

## Description

### DOMAINE TECHNIQUE

L'invention concerne un moyeu équipé pour carter d'échappement comprenant un moyeu, un flasque amont et un flasque aval disposés de part et d'autre du moyeu, chaque flasque se terminant par une bride, et une pluralité de manchettes disposées sur le moyeu en formant un angle compris entre la tangente et la direction radiale.

Les turboréacteurs d'aviation comprennent un carter d'échappement situé en aval de la turbine basse pression. Ce carter a pour fonction de suspendre le moteur sous l'aile, de faire passer les tubes de servitude, de reprendre les efforts en cas de perte d'aube.

Le carter d'échappement est fréquemment une pièce mécano-soudée constituée d'un moyeu comportant des manchettes disposées sensiblement radialement et de bras soudés aux manchettes. Des pièces sont soudées aux extrémités des bras pour former une virole extérieure. Le document US 2005/026 847 décrit un carter d'échappement de ce type. Le document EP-A-0 344 877 décrit un moyeu conforme au préambule de la revendication 1.

Les carters actuellement connus ont toutefois une durée de vie limitée en raison de concentrations de contraintes dans les manchettes du moyeu. Ces contraintes atteignent 75 Hbar de telle sorte que la durée de vie du carter d'échappement est limité à 6000 à 10000 cycles. Pour ne pas avoir à changer les carters à ces durées de vie, un plan d'inspection est mis en place. Cette mesure est coûteuse pour les compagnies aériennes car cela les oblige à intervenir sous l'aile de l'avion et à immobiliser ce dernier.

La présente invention a pour objet un moyeu équipé pour carter d'échappement et un carter d'échappement qui remédient à ces inconvénients en permettant, notamment, d'augmenter la durée de vie des carters d'échappement.

Ces buts sont atteints conformément à l'invention, par l'ajout d'au moins une nervure formée à la base de chaque manchette en dessous de la zone de contraintes critiques dans la manchette, ladite nervure étant raccordée au flasque aval à une extrémité aval et au flasque amont à une extrémité amont.

Dans une variante de réalisation le moyeu de carter comprend une seule nervure. Dans une autre variante de réalisation le moyeu comporte une nervure amont raccordée au flasque amont et une nervure aval raccordée au flasque aval.

Selon une autre réalisation le moyeu équipé de l'invention est tel que la longueur des manchettes varie de manière à affleurer du flasque amont ou aval le plus grand à une longueur permettant la liaison directe du moyeu équipé avec la virole sans bras ajouté.

L'invention concerne également un carter d'échappement comprenant un moyeu équipé comportant une pluralité de manchettes formant un angle de la tangente vers la direction radiale de 10° à 80° et de préférence de 15° à 75°. Le carter d'échappement comprend également une virole entourant le moyeu, et des bras soudés entre la virole et chaque manchette. Le moyeu est conforme à la présente invention.

D'autre part, l'invention concerne une turbine qui comprend un carter d'échappement conforme à la présente invention.

Enfin, selon un autre aspect, l'invention concerne une turbomachine qui comprend un carter d'échappement conforme à la présente invention.

D'autres caractéristiques et avantages de la présente invention apparaîtront encore à la lecture de la description qui suit d'exemples de réalisation donné à titre illustratif en référence aux figures annexées. Sur ces figures .
- la figure 1 est une vue en perspective d'un carter d'échappement conforme à la présente invention ;
- les figures 2 et 3 sont respectivement une vue de dessus et une vue de côté d'un moyeu équipé pour carter d'échappement conforme à la présente invention ;
- la figure 4 est une vue de face d'une variante de réalisation de l'invention.

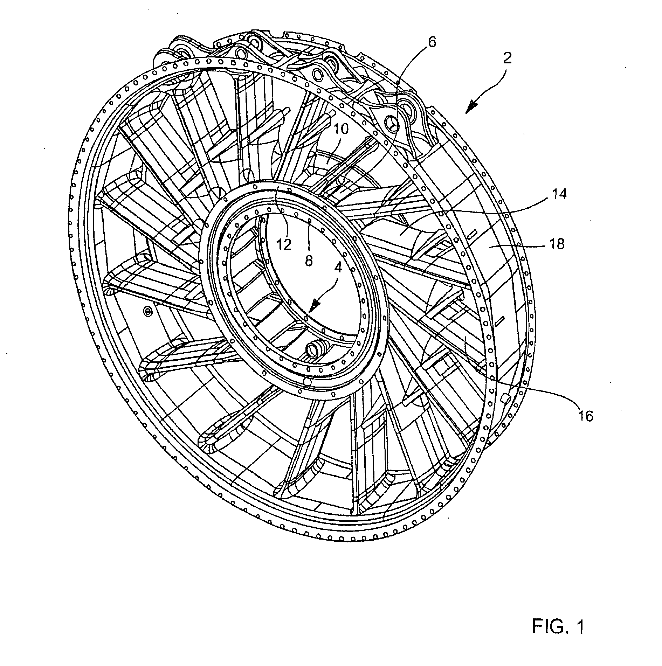

Sur la figure 1 la référence générale 2 désigne un carter d'échappement conforme à la présente invention. Ce carter d'échappement comprend un moyeu équipé désigné par la référence 4. Le moyeu équipé 4 comprend un centre de moyeu 6 et, de part et d'autre de ce centre de moyeu 6, un flasque amont 8 et un flasque aval 10 se terminant par une bride 12. Des manchettes 14 sont formées sur le centre de moyeu 6. Dans l'exemple de réalisation représenté, ces manchettes sont au nombre de seize. Le moyeu équipé 4 est une pièce de fonderie. Un bras 16 est soudé à l'extrémité de chacune des manchettes 14. Il y a donc seize bras dans l'exemple de réalisation représenté. Des pièces circulaires 18 en nombre égal au nombre de bras sont soudées aux extrémités des bras 16 de manière à former une virole circulaire qui complète le carter d'échappement.

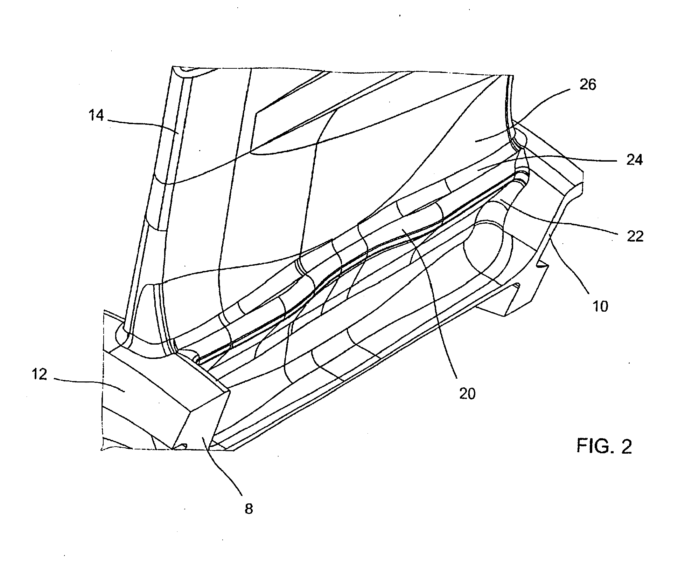

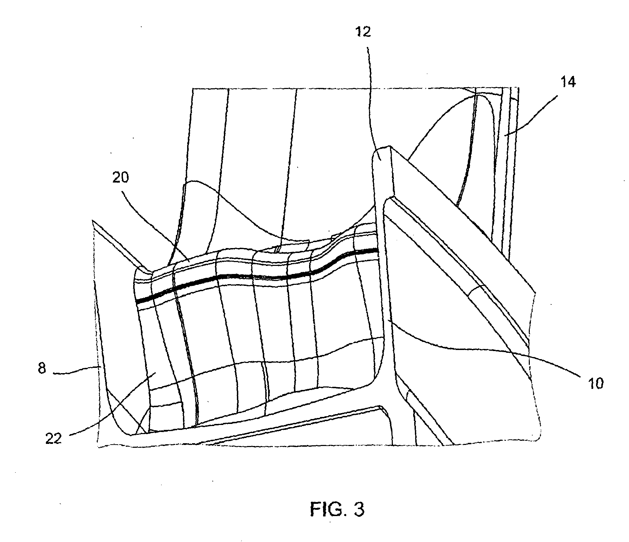

On a représenté sur les figures 2 et 3 respectivement une vue de dessus et une vue de côté d'une nervure 20 formée dans le moyeu équipé pour carter d'échappement représenté sur la figure 1. La nervure 20 s'étend du flasque amont 8 au flasque aval 10. Elle raccordée au flasque amont 8 et au flasque aval 10 par des arrondis 22. De la même manière elle est raccordée aux bras 14 par un arrondis 24. Selon sa hauteur, cette nervure est placée sensiblement en dessous du point de contraintes maximale 26. Des calculs ont permis de constater qu'avec cette nervure les contraintes sont très bien réparties. La contrainte maximale tombe à 26 Hbar ce qui permet d'envisager une durée de vie supérieure à 50000 cycles, ce qui est supérieur à la valeur haute couramment retenue.

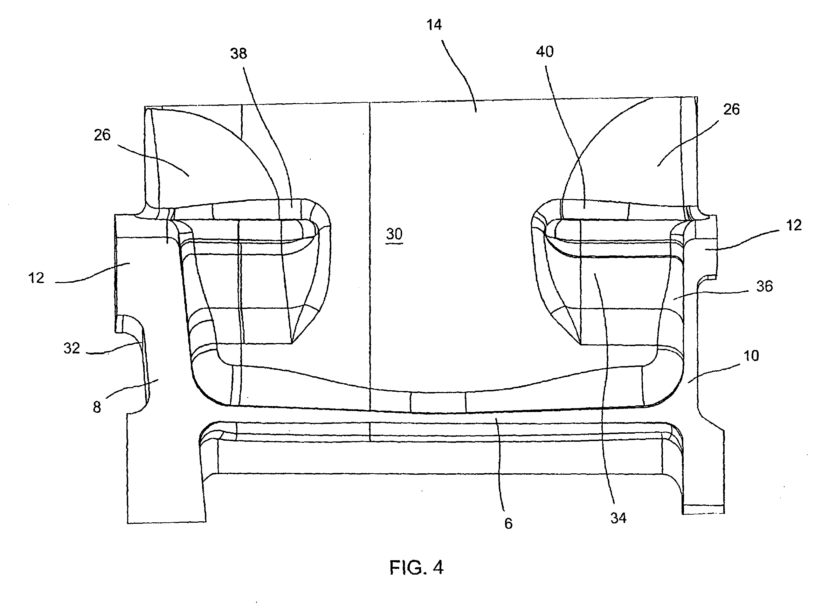

On a représenté sur la figure 4 une vue de face d'une nervure double faisant partie d'un carter d'échappement conforme à la présente invention.

La référence 30 désigne une nervure amont raccordée au flasque amont 8 par un rayon de raccordement 32. La référence 34 désigne une nervure aval raccordée au flasque aval 10 par un rayon de raccordement 36. De même, la nervure amont 30 se raccorde à la manchette 14 par un rayon de raccordement 38 tandis que la nervure avale 34 se raccorde à la manchette 14 par un rayon de raccordement 40. Selon leur hauteur, les nervures 30 et 34 sont situées en dessous d'une zone 26 de contraintes critiques dans la manchette 14.

Des mesures ont permis de constater qu'avec ces deux nervures les contraintes sont également très bien réparties. La contrainte maximale tombe à 31,5 Hbar, ce qui permet d'envisager une durée de vie supérieure à 36 000 cycles, ce qui est supérieur à la valeur haute couramment retenue.

## Revendications

1. Moyeu équipé (4) pour carter d'échappement, ledit moyeu équipé (4) comprenant un moyeu (6), un flasque amont (8) et un flasque aval (10) disposés de part et d'autre du moyeu (6), une pluralité de manchettes (14) disposée sur le moyeu (6) en formant un angle compris entre la tangente et la direction radiale et au moins une nervure, tel que ladite au moins une nervure (20, 30, 34) est formée à la base de chaque manchette (14) en dessous d'une zon de contrainte critique (26) dans la manchette (14), **caractérisé en ce que** ladite nervure (20, 30, 34) étant raccordée au flasque aval (8) à une extrémité aval et au flasque amont (10) à une extrémité amont.

2. Moyeu équipé (4) selon la revendication 1, **caractérisé en ce qu'**il comporte une nervure amont (30) raccordée au flasque amont (8) et une nervure aval (34) raccordée au flasque aval (10).

3. Moyeu équipé (4) selon l'une quelconque des revendications 1 à 2, **caractérisé en ce que** la longueur des manchettes varie de manière à affleurer du flasque amont ou aval le plus grand à une longueur permettant la liaison directe du moyeu équipé (4) avec une virole sans bras ajouté.

4. Moyeu équipé (4) selon l'une quelconque des revendications 1 à 3, **caractérisé en ce que** chaque manchette (14) disposée sur le moyeu (6) forme un angle compris entre la tangente vers la direction radiale de 10° à 80° et de préférence de 15° à 75°.

5. Carter d'échappement comprenant un moyeu équipé (4) comportant une pluralité de manchettes (14) et une virole (18) entourant le moyeu équipé (4), des bras (16) formant un angle de la tangente vers la direction radiale de 10° à 80° et de préférence de 15° à 75° étant soudés entre la virole (18) et chaque manchette (14), **caractérisé en ce que** le moyeu équipé (4) est conforme à l'une des revendications 1 à 4.

6. Turbine **caractérisée en ce qu'**elle comprend un carter d'échappement selon la revendication précédente.

7. Turbomachine **caractérisée en ce qu'**elle comprend un carter d'échappement selon la revendication 5.

## Claims

1. An equipped hub for an exhaust casing, said equipped hub comprising a hub (6), an upstream flange (8) and a downstream flange (10) arranged on either side of the hub (6), a plurality of cuffs (14) arranged on the hub (6) and forming an angle between the tangent and the radial direction and at least one rib such that said at least one rib (20,30,34) is formed at the base of each cuff (14) below a critical stress region (26) in the cuff (14), **characterized in that** said rib is joined to the downstream flange (8) at a downstream end and to the upstream flange (10) at an upstream end.

2. The equipped hub (4) as claimed in claim 1, which comprises an upstream rib (30) joined to the upstream flange (8) and a downstream rib (34) joined to the downstream flange (10).

3. The equipped hub (4) as claimed in either one of claims 1 and 2, wherein the length of the cuffs varies so as to be flush with the larger upstream or downstream flange over a length allowing the direct connection of the equipped hub (4) with a shroud without an added arm.

4. The equipped hub (4) as claimed in any one of claims 1 to 3, wherein each cuff (14) arranged on the hub (6) forms an angle between the tangent toward the radial direction of 10° to 80°, preferably 15° to 75°.

5. An exhaust casing comprising an equipped hub (4) comprising a plurality of cuffs (14) and a shroud (18) surrounding the equipped hub (4), arms (16) forming an angle from the tangent toward the radial direction of 10° to 80°, preferably 15° to 75°, being welded between the shroud (18) and each cuff (14), **characterized in that** the equipped hub is in accordance with one of claims 1 to 4.

6. A turbine which comprises an exhaust casing as claimed in the preceding claim.

7. A turbomachine which comprises an exhaust casing as claimed in claim 5.

## Patentansprüche

1. Ausgestattete Nabe (4) für ein Austrittsgehäuse, wobei die ausgestattete Nabe (4) eine Nabe (6), einen stromaufwärts gelegenen Flansch (8), einen stromabwärts gelegenen Flansch (10) und mehrere Manschetten (14) aufweist, die beiderseits der Nabe (6) angeordnet sind, wobei derart ein Winkel zwischen der Tangente und der radialen Richtung und wenigstens einer Rippe gebildet ist, dass die wenigstens eine Rippe (20, 30, 34) an der Basis jeder Manschette (14) unter einer kritischen Beanspruchungszone (26) in der Manschette (14) gebildet ist, **dadurch gekennzeichnet, dass** die Rippe (20, 30, 34) an den stromabwärts gelegenen Flansch (8) an einem stromabwärts gelegenen Ende und an den stromaufwärts gelegenen Flansch (10) an einem stromaufwärts gelegenen Ende angeschlossen ist.

2. Ausgestattete Nabe (4) nach Anspruch 1, **dadurch gekennzeichnet, dass** sie eine stromaufwärts gelegene Rippe (30), die an den stromaufwärts gelegenen Flansch (8) angeschlossen ist, und eine stromabwärts gelegene Rippe (34) aufweist, die an den stromabwärts gelegenen Flansch (10) angeschlossen ist.

3. Ausgestattete Nabe (4) nach einem der Ansprüche 1 bis 2, **dadurch gekennzeichnet, dass** die Länge der Manschetten derart variiert, dass sie vom größten stromaufwärts oder stromabwärts gelegenen Flansch in einer Länge hervortritt, welche die direkte Verbindung der ausgestatteten Nabe (4) mit einem Ring ohne angefügten Arm ermöglicht.

4. Ausgestattete Nabe (4) nach einem der Ansprüche 1 bis 3, **dadurch gekennzeichnet, dass** jede an der Nabe (6) angeordnete Manschette (14) einen Winkel bildet, der zwischen der Tangente und der radialen Richtung bei 10° bis 80° und bevorzugt bei 15° bis 75° liegt.

5. Austrittsgehäuse mit einer ausgestatteten Nabe (4), die mehrere Manschetten (14) und einen die ausgestattete Nabe (4) umgebenden Ring (18) aufweist, wobei Arme (16), die einen Winkel der Tangente zur radialen Richtung von 10° bis 80° und bevorzugt von 15° bis 75° bilden, zwischen den Ring (18) und jede Manschette (14) geschweißt sind, **dadurch gekennzeichnet, dass** die ausgestattete Nabe (4) einem der Ansprüche 1 bis 4 entspricht.

6. Turbine, **dadurch gekenntzeichnet, dass** sie ein Austrittsgehäuse nach dem vorhergehenden Anspruch aufweist.

7. Turbomaschine, **dadurch gekennzeichnet, dass** sie ein Austrittsgehäuse nach Anspruch 5 aufweist.
